# EUROPÄISCHE PATENTANMELDUNG

(11) **EP 3 401 142 A1**
(43) Veröffentlichungstag der Anmeldung: **14.11.2018**
(21) Anmeldenummer: 18165755.2
(22) Anmeldetag: 04.04.2018
(51) Int. Cl.: B60J 7/02, B60J 7/043, B60J 7/00

(54) **ANTRIEBSSYSTEM FÜR EIN BEWEGLICHES DACHTEIL EINES SPOILERDACHMODULS EINES KRAFTFAHRZEUGS**

(30) Priorität: 10.05.2017 DE 102017207890
(71) Anmelder: BOS GmbH & Co. KG, 73760 Ostfildern (DE)
(72) Erfinder: Heidan, Michael, 70569 Stuttgart (DE)
(74) Vertreter: Patentanwälte Ruff, Wilhelm, Beier, Dauster & Partner mbB

(57) **Zusammenfassung**

1. Antriebssystem für ein bewegliches Dachteil eines Spoilerdachmoduls eines Kraftfahrzeugs
2.1 Ein derartiges Antriebssystem mit einem Trägerprofil, an dem das bewegliche Dachteil befestigt ist, und dem eine Steuermechanik zugeordnet ist, um das Trägerprofil zwischen einer Schließstellung, einer Lüfterstellung und einer Öffnungsstellung zu verlagern, wobei die Steuermechanik in einer fahrzeugfesten Führungsschienenanordnung verfahrbar gelagert ist, und wobei eine hochkant ausgerichtete Seitenblende vorgesehen ist, die in Längsrichtung der Führungsschienenanordnung erstreckt ist, ist bekannt.
2.2 Erfindungsgemäß ist die Seitenblende in Hochrichtung relativ zu der Führungsschienenanordnung begrenzt beweglich gelagert.
2.3 Einsatz bei Personenkraftwagen

## Beschreibung

Die Erfindung betrifft ein Antriebssystem für ein bewegliches Dachteil eines Spoilerdachmoduls eines Kraftfahrzeugs, mit einem Trägerprofil, an dem das bewegliche Dachteil befestigt ist, und dem eine Steuermechanik zugeordnet ist, um das Trägerprofil zwischen einer Schließstellung, einer Lüfterstellung und einer Öffnungsstellung zu verlagern, wobei die Steuermechanik in einer fahrzeugfesten Führungsschienenanordnung verfahrbar gelagert ist, und wobei eine hochkant ausgerichtete Seitenblende vorgesehen ist, die in Längsrichtung der Führungsschienenanordnung erstreckt ist.

Ein derartiges Antriebssystem ist für ein Spoilerdachmodul eines Personenkraftwagens allgemein bekannt. Das Spoilerdachmodul ist in einem Dachausschnitt einer Fahrzeugkarosserie des Personenkraftwagens montierbar und weist ein bewegliches Dachteil auf, das zwischen einer eine Dachöffnung verschließenden Schließstellung, einer schräg nach hinten und nach oben ausgestellten Lüfterstellung und einer über einen feststehenden Dachabschnitt nach hinten verfahrenen Öffnungsstellung verlagerbar ist. Zur Verlagerung des beweglichen Dachteils ist ein Antriebssystem vorgesehen, das auf gegenüberliegenden Seiten der Dachöffnung identisch gestaltete Antriebs- und Funktionskomponenten aufweist. Jede Seite weist einen Steuerschlitten auf, der mittels eines Antriebsübertragungskabels in einer fahrzeugfesten Führungsschienenanordnung längsverfahrbar ist. Das Antriebsübertragungskabel ist in einem Rahmen des Spoilerdachmoduls, der auch die Führungsschienenanordnung umfasst, längsverschiebbar geführt und wird durch einen elektrischen Antriebsmotor in Längsrichtung der Führungsschienenanordnung nach vorne oder nach hinten verfahren. Im Bereich einer Unterseite des beweglichen Dachteils ist auf gegenüberliegenden Seiten jeweils ein Trägerprofil vorgesehen, das mit der Unterseite des beweglichen Dachteils fest verbunden ist. Das Trägerprofil erstreckt sich im Wesentlichen in Fahrzeuglängsrichtung und wird von einer vorderen Ausstellmechanik sowie von einer hinteren Ausstellmechanik getragen, die Funktionskomponenten einer Steuermechanik des Antriebssystems darstellen. Zur Verlagerung der vorderen Ausstellmechanik und der hinteren Ausstellmechanik in Hochrichtung und/oder in Längsrichtung sind die beiden Mechaniken mit dem Steuerschlitten verbunden. Die vordere Ausstellmechanik weist einen schwingenartigen Ausstellhebel auf, der mit einem vorderen Hebelfortsatz schwenkbeweglich an dem Trägerprofil und mit einem rückseitigen Hebelfortsatz schwenkbeweglich an dem Steuerschlitten gelagert ist. Der Ausstellhebel ist im Bereich seiner Unterseite mit einem Gleitschuh versehen, der in einem Führungskanal der Führungsschienenanordnung längsverschiebbar geführt ist. Das bekannte Antriebssystem weist seitlich außen eine hochkant ausgerichtete Seitenblende auf, um einen Blick von außen auf die Steuermechanik und insbesondere eine hintere Ausstellmechanik der Steuermechanik zu unterbinden.

Aufgabe der Erfindung ist es, ein Antriebssystem der eingangs genannten Art zu schaffen, das mit einfachen Mitteln in unterschiedlichen Funktionsstellungen des beweglichen Dachteils einen Blick von außen auf die Steuermechanik zumindest teilweise unterbindet.

Diese Aufgabe wird dadurch gelöst, dass die Seitenblende in Hochrichtung relativ zu der Führungsschienenanordnung begrenzt beweglich gelagert ist. Dadurch ist es möglich, in unterschiedlichen Stellungen des Dachteils einen Sichtschutz gegen Blicke von einer Außenseite des Kraftfahrzeugs auf die Steuermechanik zu unterbinden. Die erfindungsgemäße Lösung ist für ein Spoilerdachmodul vorgesehen. Unter einem Spoilerdachmodul ist ein Schiebedachsystem zu verstehen, das ein bewegliches Dachteil aufweist, das in eine Öffnungsstellung über einen feststehenden, hinteren Dachabschnitt hinweg verlagert wird, wobei Funktionskomponenten des Antriebssystems in entsprechend seitlichen Bereichen der Dachöffnung des Spoilerdachmoduls verbleiben. Das bewegliche Dachteil ragt demzufolge in seiner Öffnungsstellung teilweise "frei schwebend" über den feststehenden Dachabschnitt hinweg. In der Öffnungsstellung wird ein vorderer Bereich des beweglichen Dachteils von den Funktionskomponenten des Antriebssystems gehalten, so dass die Dachöffnung des Spoilerdachmoduls auch in der Öffnungsstellung lediglich teilweise freigegeben werden kann im Vergleich zu einem Schiebedachsystem, das nach dem Inner-Slider- oder dem Outer-Slider-Funktionsprinzip gestaltet ist. Das Spoilerdachmodul ist vorzugsweise als vormontierte Baueinheit in einen Dachausschnitt eines Dachbereichs des Personenkraftwagens eingepasst. Die erfindungsgemäße Lösung eignet sich in besonders vorteilhafter Weise für den Einsatz in einem Dachbereich eines Personenkraftwagens. In gleicher Weise ist jedoch auch ein Einsatz für andere Land- oder Wasserfahrzeuge vorgesehen.

In Ausgestaltung der Erfindung ist der Seitenblende eine Zwangssteuerung zugeordnet, die eine Verlagerung der Seitenblende in Abhängigkeit von einer Bewegung wenigstens eines Funktionsteiles der Steuermechanik durchführt. Die Zwangssteuerung gewährleistet, dass die Seitenblende in jeder Stellung stabil gehalten und exakt positioniert ist. Die Zwangssteuerung gewährleistet zudem eine Nachführung der Seitenblende abhängig von entsprechenden Stellungen des beweglichen Dachteiles.

In weiterer Ausgestaltung der Erfindung ist die Seitenblende an einem vorderen Endbereich zumindest weitgehend in einer durch die Längsrichtung sowie eine Hochrichtung der Führungsschienenanordnung aufgespannten Schwenkebene schwenkbeweglich gelagert. Die hochkant ausgerichtete Seitenblende bewegt sich demzufolge ausschließlich in einer Schwenkebene, die durch eine Längsachse und eine Hochachse, insbesondere eine Fahrzeuglängsachse und eine Fahrzeughochachse, aufgespannt ist. Die Seitenblende ist demzufolge um eine Schwenkachse schwenkbeweglich gelagert, die zumindest weitgehend in Fahrzeugquerrichtung erstreckt ist.

In weiterer Ausgestaltung der Erfindung ist die Seitenblende mittels einer Bogenführung in dem vorderen Endbereich um einen virtuellen Drehpunkt in Längsrichtung und in Hochrichtung verlagerbar. Die Bogenführung ist mechanisch ausgeführt und wird insbesondere durch eine zumindest weitgehend kreisbogenförmige Kulisse einerseits und einen komplementär bogenförmig gekrümmten Kulissenstein andererseits gebildet. Dabei ist der Kulissenstein vorzugsweise ortsfest im Bereich einer Seitenwandung der Führungsschienenanordnung und die Kulisse im Bereich der Seitenblende vorgesehen. Alternativ kann auch der Kulissenstein an der Seitenblende und die Kulisse selbst im Bereich der Führungsschienenanordnung vorgesehen sein. Die Bogenführung gewährleistet, dass die Seitenblende bei einer Schwenkbewegung eine zusätzliche begrenzte Verlagerung in Längsrichtung durchführt.

In weiterer Ausgestaltung der Erfindung ist die Seitenblende in Abstand hinter dem vorderen Endbereich mit einer gekrümmten Führungskulisse versehen, in die ein Kulissenglied gleitbeweglich eingreift, das mit dem Funktionsteil der Steuermechanik verbunden ist. Diese Ausgestaltung bildet eine mechanische Zwangssteuerung der Seitenblende. Als Funktionsteil der Steuermechanik ist vorzugsweise ein in der Führungsschienenanordnung längsverschiebbares Teil vorgesehen.

In weiterer Ausgestaltung der Erfindung ist als Funktionsteil eine in der Führungsschienenanordnung begrenzt linearbeweglich verschiebbare Steuerstange einer hinteren Ausstellmechanik vorgesehen. Die Kopplung der Zwangssteuerung der Seitenblende an die Bewegung der Steuerstange der hinteren Ausstellmechanik ist vorteilhaft, da die hintere Ausstellmechanik dafür verantwortlich ist, einen hinteren Abschnitt des beweglichen Dachteiles schräg nach oben in die Lüfterstellung auszustellen. Mit der Überführung der hinteren Ausstellmechanik in diese Ausstellposition wird somit die Seitenblende nachgeführt, so dass die hintere Ausstellmechanik auch in der Lüfterstellung des beweglichen Dachteiles durch die Seitenblende für Blicke von außen verdeckt ist.

In weiterer Ausgestaltung der Erfindung weist die Führungsschienenanordnung in einer zu der Seitenblende gewandten Seitenwandung einen in Längsrichtung der Führungsschienenanordnung erstreckten Führungsschlitz auf, durch den das Kulissenglied von der Steuerstange zu der Seitenblende hindurchragt. Diese Ausgestaltung ist vorteilhaft bei Anordnung der Seitenblende seitlich außerhalb der Führungsschienenanordnung. Denn die Steuerstange der hinteren Ausstellmechanik befindet sich in einem Führungskanal innerhalb der Führungsschienenanordnung, so dass das Kulissenglied die Seitenwandung der Führungsschienenanordnung über den Führungsschlitz durchdringen und die mechanische Kopplung zwischen der Führungskulisse der Seitenblende und der Steuerstange bewirken kann.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung ein Spoilerdachmodul für einen Dachbereich eines Personenkraftwagens in einer Schließstellung eines beweglichen Dachteils,
- Fig. 2: das Spoilerdachmodul nach Fig. 1 mit dem in seine Öffnungsstellung verlagerten beweglichen Dachteil,
- Fig. 3: in einer Explosionsdarstellung schräg von vorne und von außen (auf eine Fahrzeugmitte bezogen) eine Ausführungsform eines erfindungsgemäßen Antriebssystems für das Spoilerdachmodul nach den Fig. 1 und 2,
- Fig. 4: das Antriebssystem nach Fig. 3 in einer Explosionsdarstellung schräg von vorne und von innen,
- Fig. 5: in einer Seitenansicht das Antriebssystem nach den Fig. 3 und 4,
- Fig. 6: in einer Seitenansicht von innen her einen vorderen Teilbereich des Antriebssystems gemäß den Fig. 3 bis 5,
- Fig. 7: den vorderen Bereich gemäß Fig. 6 unter Weglassung einer Trägerleiste des Antriebssystems,
- Fig. 8: den vorderen Bereich gemäß den Fig. 6 und 7 in einer gegenüber den Fig. 6 und 7 verlagerten, weiteren Funktionsstellung,
- Fig. 9 bis 12: in isometrischer Darstellung von außen her den Frontbereich des Antriebssystems in unterschiedlichen Funktionsstellungen eines Ausstellhebels einer vorderen Ausstellmechanik des Antriebssystems,
- Fig. 13: in perspektivischer Darstellung schräg von innen und von hinten eine hintere Ausstellmechanik des Antriebssystems nach den Fig. 3 und 4,
- Fig. 14 bis 19: in einer Seitenansicht von außen her die hintere Ausstellmechanik gemäß Fig. 13 in unterschiedlichen Funktionsstellungen zwischen einer Ruhestellung (Fig. 14) und einer vollständig aufgestellten Öffnungsstellung (Fig. 19),
- Fig. 20: in perspektivischer Darstellung eine Steuerstange und eine Seitenblende des Antriebssystems nach den Fig. 3 und 4,
- Fig. 21: in einer Draufsicht die Steuerstange und die Seitenblende gemäß Fig. 20,
- Fig. 22 und 23: in einer Seitenansicht die Seitenblende des Antriebssystems nach den Fig. 3 und 4 in unterschiedlichen Funktionsstellungen,
- Fig. 24: einen Ausschnitt einer weiteren Ausführungsform eines erfindungsgemäßen Antriebssystems ähnlich den Fig. 3, 4, 22 und 23 mit schematischer Darstellung eines virtuellen Drehpunkts und
- Fig. 25 bis 28: in einem Horizontalschnitt einen Ausschnitt des Antriebssystems nach den Fig. 3 und 4 im Bereich einer führungsschienenfesten Sicherung der Steuerstange der hinteren Ausstellmechanik in unterschiedlichen Funktionsstellungen.

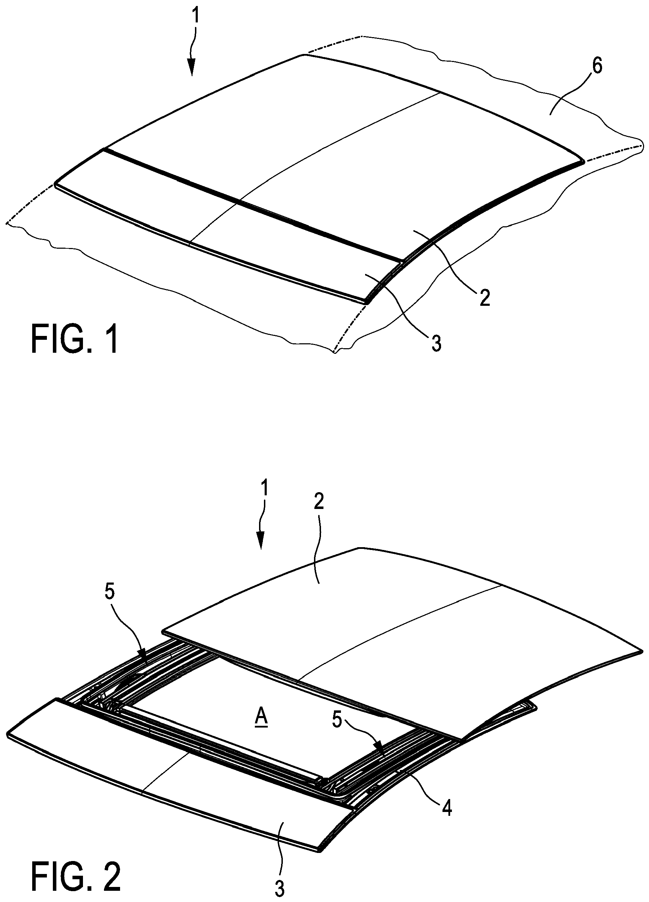

Ein Personenkraftwagen weist gemäß den Fig. 1 und 2 einen Dachbereich 6 auf, der mit einem Spoilerdachmodul 1 versehen ist. Hierzu ist der Dachbereich 6 der Fahrzeugkarosserie des Personenkraftwagens mit einem Dachausschnitt versehen, in den das Spoilerdachmodul 1 eingesetzt ist. Das Spoilerdachmodul 1 weist einen Tragrahmen 4 auf, der eine Dachöffnung A umgrenzt. Die Dachöffnung A ist durch ein bewegliches Dachteil 2 verschließbar. Eine Schließstellung des beweglichen Dachteils 2 ist in Fig. 1 dargestellt. In Fig. 2 ist eine Öffnungsstellung des beweglichen Dachteils 2 gezeigt. Frontseitig - auf eine normale Fahrtrichtung des Personenkraftwagens bezogen - ist der Tragrahmen 4 mit einem über eine Breite des Tragrahmens 4 erstreckten Frontteil 3 versehen, das oberseitig durch eine Frontblende abgedeckt ist. Unterhalb der Frontblende ist eine Antriebseinheit für zwei identisch zueinander gestaltete Antriebssysteme 5 vorgesehen, die in seitlichen Längsabschnitten des Tragrahmens 4 angeordnet sind. Die Antriebssysteme 5 auf gegenüberliegenden Längsseiten der Dachöffnung A sind identisch zueinander gestaltet und mittels der nicht dargestellten Antriebseinheit synchronisiert zueinander betätigbar. Das Dachteil 2 ist im Bereich seiner Unterseite auf gegenüberliegenden Längsseiten mit jeweils einem Trägerprofil 11 des jeweiligen Antriebssystems 5 fest verbunden. Das Trägerprofil 11 wird mittels nachfolgend beschriebener Funktionskomponenten des jeweiligen Antriebssystems 5 in Fahrzeughochrichtung sowie in Fahrzeuglängsrichtung verlagert, um die Verlagerung des beweglichen Dachteils 2 zwischen der Schließstellung, einer schräg nach hinten und oben ausgestellten Lüfterstellung und der in Fig. 2 dargestellten Öffnungsstellung zu bewirken. Dadurch, dass die beiden Antriebssysteme synchronisiert zueinander beweglich sind, werden auch die beiden Trägerprofile des Dachteils 2 synchron zueinander verlagert, wodurch sich die gewünschte Parallelverlagerung des Dachteils 2 zwischen der Schließstellung und der Öffnungsstellung ergibt.

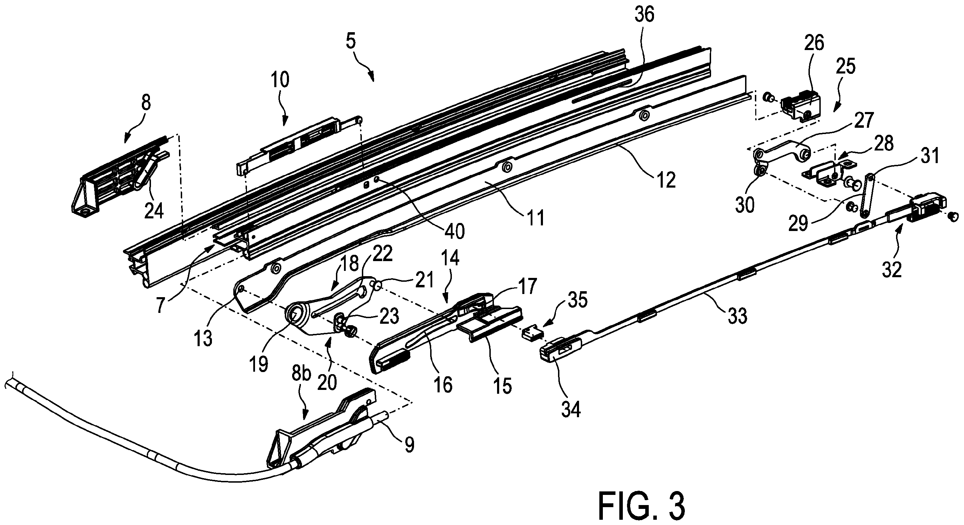

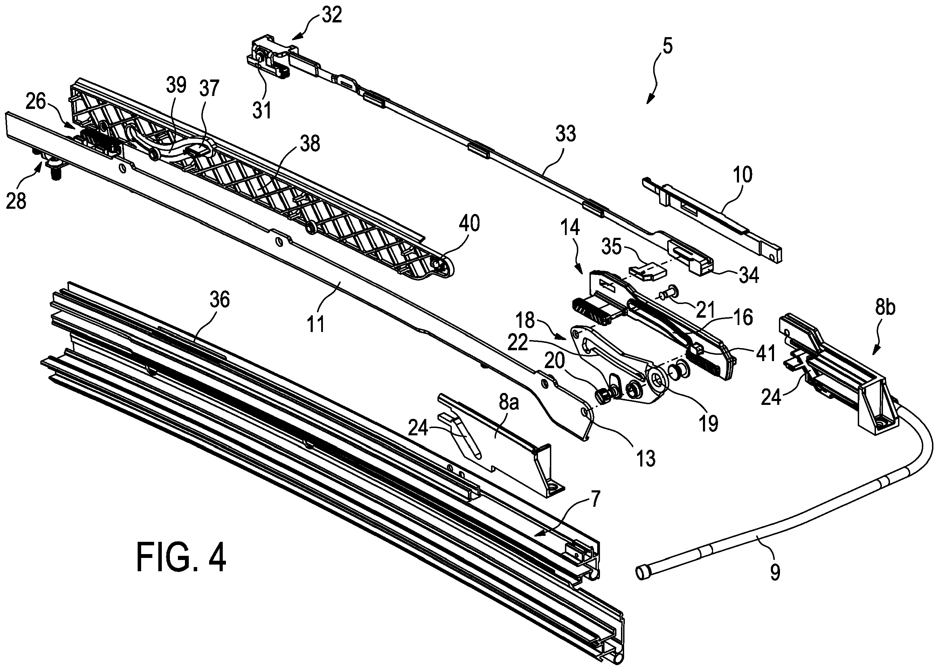

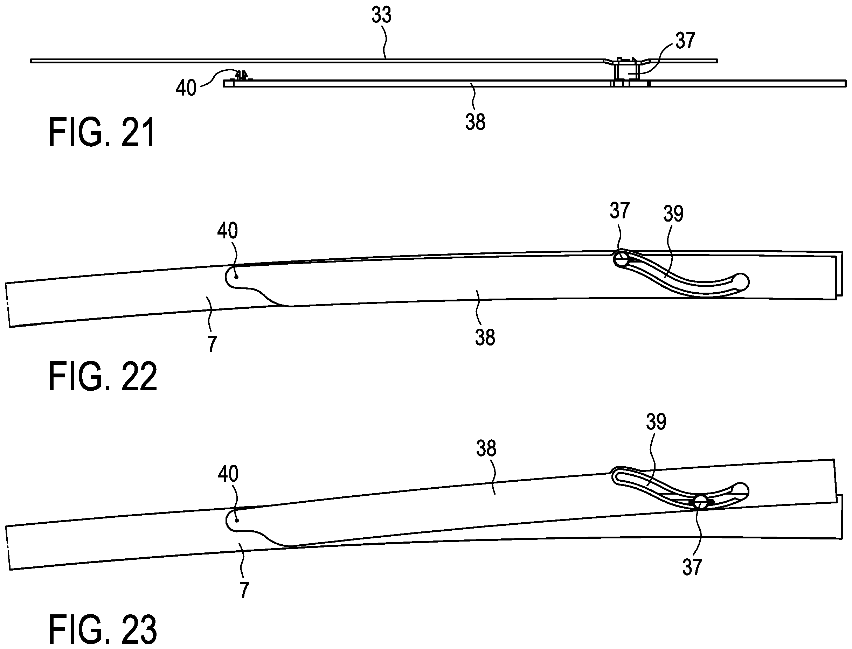

Nachfolgend wird anhand der Fig. 3 bis 28 das - in normaler Fahrtrichtung gesehen - linke Antriebssystem 5 näher beschrieben. Das gegenüberliegende Antriebssystem 5 ist spiegelsymmetrisch zu einer vertikalen Fahrzeugmittellängsebene, im Übrigen jedoch identisch gestaltet, so dass zur Vermeidung von Wiederholungen auf die Ausführungen zu dem linken Antriebssystem 5 verwiesen wird.

Das Trägerprofil 11 ist mittels einer nachfolgend beschriebenen vorderen Ausstellmechanik sowie mittels einer hinteren Ausstellmechanik 25 zwischen der Schließstellung und der Öffnungsstellung in Fahrzeuglängsrichtung sowie in Fahrzeughochrichtung verlagerbar. Die vordere und die hintere Ausstellmechanik sind Funktionskomponenten einer Steuermechanik des Antriebssystems 5. Eine Aktivierung und Verlagerung der vorderen Ausstellmechanik wie auch der hinteren Ausstellmechanik 25 erfolgt mittels eines Steuerschlittens 14, an dem ein Antriebsglied 15 fest angeordnet ist, das mit einem Antriebsübertragungsstrang verbunden ist, der in einem Hüllrohr 9 im Frontbereich des Trägerrahmens 4 sowie im Übrigen in einem Längskanal einer Führungsschiene 7 längsverschiebbar geführt ist. Der Steuerschlitten 14 einschließlich seines Antriebsglieds 15 ist in einem Führungskanal der Führungsschienenanordnung 7 längsverschiebbar geführt. Hierzu weist der Steuerschlitten 14 mehrere, nicht näher bezeichnete Gleitschuhe auf. Die Führungsschienenanordnung 7 ist Teil des Trägerrahmens 4 und demzufolge im betriebsfertig montierten Zustand des Trägerrahmens 4 fahrzeugfest angeordnet. Der Antriebsübertragungsstrang ist als Gewindesteigungskabel oder als flexible Zahnstange ausgeführt. Der Antriebsübertragungsstrang ist in dem Frontbereich des Trägerrahmens 4 mittels des Hüllrohrs 9 zu einer Mitte hin umgelenkt, wo der Antriebsübertragungsstrang mit der zentralen Antriebseinheit in Wirkverbindung steht. Die zentrale Antriebseinheit weist einen elektrischen Antriebsmotor sowie ein geeignetes Schneckengetriebe auf, das das Gewindesteigungskabel bei Aktivierung des Antriebsmotors in geeigneter Weise innerhalb des Hüllrohrs und des Kanalabschnitts der Führungsschienenanordnung 7 in entgegengesetzten Richtungen verschieben kann.

Die vordere Ausstellmechanik weist einen Ausstellhebel 18 auf, der im Bereich seiner Unterseite mittels eines Gleitschuhs 20 in einem Führungskanal der Führungsschienenanordnung 7 gleitbeweglich geführt ist. Der Gleitschuh 20 bildet ein unteres Gleitgelenk im Sinne der Erfindung. Der Führungskanal der Führungsschienenanordnung 7 geht in einem Frontbereich der Führungsschienenanordnung 7 über in eine Gleitschräge 24 eines zweischaligen Frontteils 8, 8a, 8b der Führungsschienenanordnung 7. Das Frontteil 8, 8a, 8b ist aus Kunststoff hergestellt. Die Gleitschräge 24 erstreckt sich ausgehend von einem mit dem Führungskanal der Führungsschienenanordnung 7 fluchtenden Abschnitt schräg nach vorne und nach unten unter eine Horizontalebene des Führungskanals der Führungsschienenanordnung 7.

Der Ausstellhebel 18 weist zudem frontseitig ein Stützlager 19 auf, mittels dessen der Ausstellhebel 18 schwenkbeweglich an einer frontseitigen Aufnahme 13 des Trägerprofils 11 gelagert ist. Rückseitig weist der Ausstellhebel 18 ein Steuerlager 21 auf, das in eine Steuerkulisse 16 eines Steuerschlittens 14 eingreift. Dabei ist das Steuerlager 21 sowohl gleitbeweglich als auch um eine in Fahrzeugquerrichtung erstreckte Drehachse drehbeweglich in der Steuerkulisse 16 gehalten. Der Ausstellhebel 18 selbst weist ebenfalls eine Steuerkulisse 22 auf, in die ein Steuernocken 41 des Steuerschlittens 14 eingreift. Der Steuernocken 41 ragt zu dem Ausstellhebel 18 nach innen ab, während das Steuerlager 21 des Ausstellhebels 18 zu dem Steuerschlitten 14 und in die Steuerkulisse 16 hinein seitlich nach außen abragt. Der Steuerschlitten 14 ist in dem Führungskanal der Führungsschienenanordnung 7 gleitbeweglich längsverschiebbar geführt.

Die Steuerkulisse 22 des Ausstellhebels 18 erstreckt sich im Wesentlichen in Längsrichtung und ist an ihrem hinteren Endbereich mit einer nach unten erstreckten Tasche versehen, in die der Steuernocken 41 eintauchen und in Längsrichtung formschlüssig in der Steuerkulisse 22 gehalten werden kann. Die Steuerkulisse 16 des Steuerschlittens 14 erstreckt sich im Wesentlichen in Längsrichtung und ist im Bereich einer vorderen Hälfte leicht nach vorne unten gekrümmt.

Der Ausstellhebel 18 ist oberhalb des Gleitschuhs 20 mit einem seitlich nach außen abragenden Stützzapfen 23 versehen, der beim dargestellten Ausführungsbeispiel zylindrisch gestaltet ist. Der Stützzapfen 23 ist fest mit einer Seitenwandung des Ausstellhebels 18 verbunden. Der Stützzapfen 23 ragt derart zu dem Steuerschlitten 14 hin ab, dass der Stützzapfen 23 je nach Relativbewegung zwischen Ausstellhebel 18 und Steuerschlitten 14 mit einer frontseitigen Stirnkante bzw. einer frontseitigen Unterkante des Steuerschlittens 14 in Anlage ist, um eine gegenseitige Stützung zwischen dem Ausstellhebel 18 und dem Steuerschlitten 14 zu erreichen.

Die hintere Ausstellmechanik 25 weist einen Lagerbock 28 auf, der unterhalb der Führungsschienenanordnung 7 mit dem Trägerrahmen 4 fest verbunden ist und damit fahrzeugfest montiert ist. Statt mit dem Trägerrahmen 4 kann der Lagerbock 28 auch im Bereich einer Unterseite der Führungsschienenanordnung 7 befestigt sein. An dem Lagerbock 28 ist ein Schwenkhebel 27 in einer in Fahrzeughochrichtung und in Fahrzeuglängsrichtung erstreckten Schwenkebene schwenkbeweglich gelagert. Der Schwenkhebel 27 ist an seinem von dem Lagerbock 28 abliegenden Endbereich schwenkbeweglich mit einem Steuergleiter 26 verbunden, der einen Kulissensteg 12 des Trägerprofils 11 gleitbeweglich umschließt. Der Kulissensteg 12 ragt von einer Unterseite des Trägerprofils 11 aus seitlich nach außen ab, ist einstückiger Fortsatz des Trägerprofils 11 und erstreckt sich über eine gesamte Länge des Trägerprofils 11. Mittels des Schwenkhebels 27 ist die Trägerleiste 11 nach oben ausstellbar oder nach unten absenkbar im Bereich des Umgriffs durch den Steuergleiter 26.

Um abhängig von einer Verfahrbewegung des Steuerschlittens 14 ein Absenken oder Anheben des Steuergleiters 26 und damit des hinteren Bereichs der Trägerleiste 11 zu bewirken, ist der hinteren Ausstellmechanik 25 eine Steuerstange 32 bis 34 zugeordnet, die mittels einer Zwangsführung an dem Schwenkhebel 27 angreift, und die entweder fahrzeugfest fixiert oder mit dem Steuerschlitten 14 fest verbunden ist. Die Steuerstange 32 bis 34 weist einen rückseitigen Führungsschlitten 32 auf, der in der Führungsschienenanordnung 7 längsverschiebbar geführt ist. An dem Führungsschlitten 32 ist als Zwangsführung ein Steuerhebel 29 mittels eines Schwenklagers 31 schwenkbeweglich gelagert. Der Steuerhebel 29 greift mit seinem von dem Schwenklager 31 abliegenden Endbereich an einem Schwenklager 30 des Schwenkhebels 27 an, das unmittelbar benachbart zu der Anlenkung an dem Steuergleiter 26 vorgesehen ist.

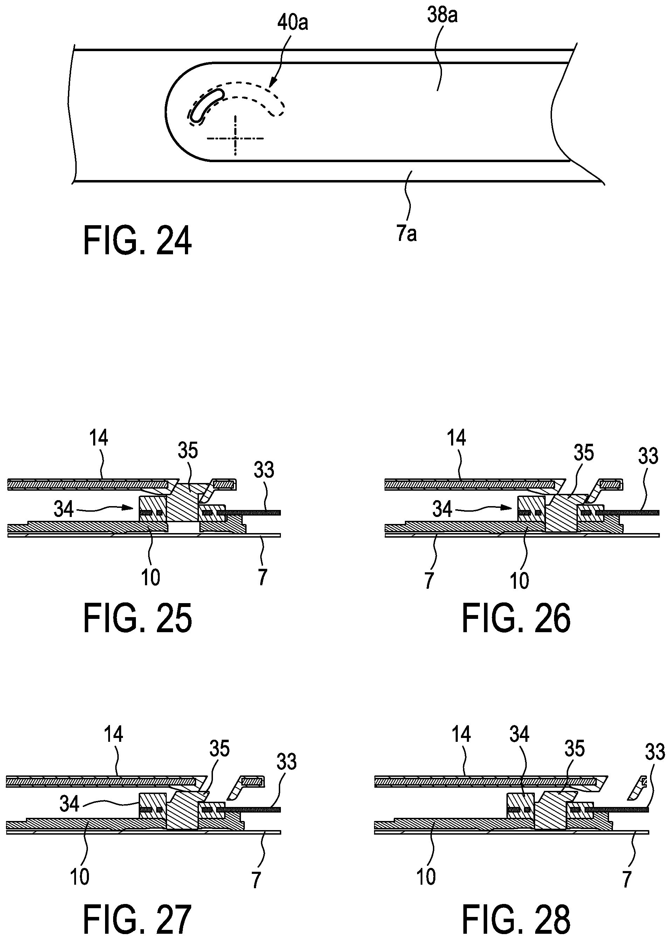

Der Führungsschlitten 32 ist mittels eines in Längsrichtung der Führungsschienenanordnung nach vorne erstreckten Stangenfortsatzes 33 mit einer Funktionstasche 34 fest verbunden, in der ein Schieberiegel 35 in Fahrzeugquerrichtung verschiebbar gehalten ist. Der Schieberiegel 35 ist entweder mit einer Aufnahmetasche 17 des Steuerschlittens 14 oder mit einer Rastaufnahme 10 formschlüssig in Wirkverbindung bringbar, die an einer Seitenwandung der Führungsschienenanordnung 7 befestigt ist. Anhand der Fig. 25 bis 28 ist erkennbar, dass der Schieberiegel 35 entweder eine formschlüssige Verbindung zwischen der Funktionstasche 34 und dem Steuerschlitten 14 (siehe Fig. 25) oder eine formschlüssige Verbindung zwischen einer Aussparung der ortsfesten Rastaufnahme 10 und der Funktionstasche 34 bewirkt. Demzufolge ist die Steuerstange 32 bis 34 entweder ortsfest in der Führungsschienenanordnung 7 gehalten oder sie wird mit dem Steuerschlitten 14 für eine Verfahrbewegung nach hinten oder nach vorne mitgenommen. Die Steuerstange 32 bis 34 verrastet mit der Rastaufnahme 10 und damit ortsfest mit der Führungsschienenanordnung in der Stellung, in der die hintere Ausstellmechanik 25 ihre obere Endlage erreicht hat. Für eine Rückführung aus der oberen Endlage nimmt der Steuerschlitten 14 die Steuerstange 32 bis 34 über die Mitnahme des Schieberiegels 35 über einen begrenzten Weg in Fahrzeuglängsrichtung nach vorne mit, wodurch die hintere Ausstellmechanik 25 bis in die Ruhestellung hinein abgesenkt werden kann.

Um einen Blick von außen auf die hintere Ausstellmechanik 25 zu verdecken und zudem einen Akustikschutz für den Fahrzeuginnenraum bei in eine Lüfterstellung oder eine andere Öffnungsstellung überführtem Dachteil 2 bewirken zu können, ist das Antriebssystem 5 zusätzlich mit einer Seitenblende 38 versehen, die seitlich außen an einer Seitenwandung der Führungsschienenanordnung 7 mittels eines Schwenklagers 40 schwenkbeweglich gelagert ist. Das Schwenklager 40 definiert eine in Fahrzeugquerrichtung erstreckte Schwenkachse. Die Seitenblende 38 erstreckt sich in Längsrichtung sowie hochkant in Hochrichtung ausgehend von dem Schwenklager 40 nach hinten. Die Seitenblende 38 weist eine als Bogenführung gestaltete, gekrümmte Führungskulisse 39 auf, in die ein bolzenartiges Kulissenglied 37 eingreift. Das bolzenartige Kulissenglied 37 ist in einem in Fahrzeuglängsrichtung erstreckten Führungsschlitz 36 der Seitenwandung der Führungsschienenanordnung 7 längsverschiebbar gelagert. Hierzu ist das Kulissenglied 37 mit einem abgeflachten Führungsabschnitt versehen, der in dem Führungsschlitz 36 linearbeweglich geführt ist und den Führungsschlitz 36 in Fahrzeugquerrichtung durchdringt. Außenseitig ragt das Kulissenglied 37 mittels eines runden Kulissensteins in die gekrümmte Führungskulisse 39 der Seitenblende 38 hinein. Die Seitenblende 38 ist außenseitig mit einer durchgängigen Schutzlage versehen, so dass die gekrümmte Führungskulisse 39 von einer Außenseite her nicht sichtbar ist. Die Schutzlage kann in Zweikomponentenbauweise einstückig mit der aus Kunststoff bestehenden Seitenblende 38 hergestellt sein oder nachträglich auf dieser angebracht sein.

Der Führungsabschnitt des Kulissenglieds 37 ist innenseitig an der Steuerstange 32 bis 34 befestigt. Vorzugsweise ist das Kulissenglied 37 mit einer Rastaussparung des Stangenfortsatzes 33 der Steuerstange 32 bis 34 verrastet.

Wenn die Steuerstange 32 bis 34 gemeinsam mit dem Steuerschlitten 14 mitbewegt wird, gleitet zwangsläufig das Kulissenglied 37 in der Führungskulisse 39 entlang, wodurch aufgrund der Krümmung der Führungskulisse 39 die Seitenblende 38 zwangsläufig eine begrenzte Schwenkbewegung um das Schwenklager 40 durchführt. Damit wird die Seitenblende 38 in der Ruhestellung der hinteren Ausstellmechanik 25 abgesenkt, während sie bei der Überführung in die Ausstellposition zwangsläufig schräg nach oben ausgeschwenkt wird und so einen Blick auf die hinteren Ausstellmechanik 25 von außen her unterbindet. Denn die Seitenblende 38 verdeckt die nach oben ausgestellte hintere Ausstellmechanik 25 zwangsläufig.

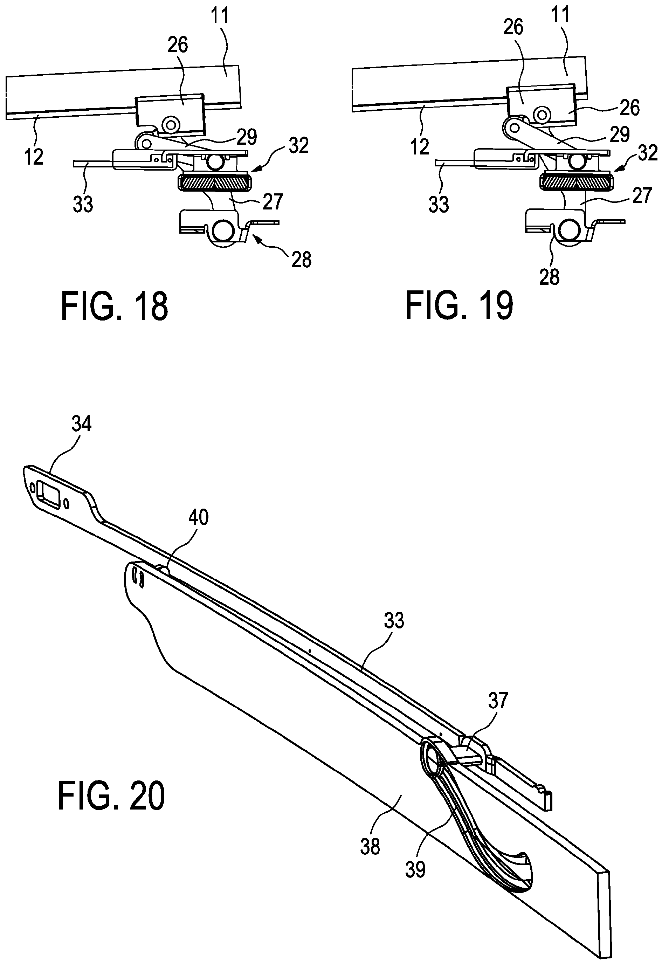

Anhand der Fig. 20 bis 23 ist die Zwangssteuerung der Seitenblende 38 anhand unterschiedlicher Funktionsstellungen gut zu erkennen.

Gemäß Fig. 24 wird bei einer weiteren Ausführungsform der Erfindung die Seitenblende 38a im Bereich eines vorderen Schwenklagers 40a relativ zu einer Führungsschienenanordnung 7a um einen virtuellen Drehpunkt verlagert, indem als Schwenklager 40a eine kreisbogenförmige Kulissenführung einerseits und ein kreisbogenartiger Kulissenstein andererseits vorgesehen sind. Falls der Kulissenstein als Führungsnocken seitlich außen an der Seitenwandung der Führungsschienenanordnung 7a vorgesehen ist und die kreisbogenabschnittsförmige Führungskulisse am Frontbereich der Seitenblende 38a vorgesehen ist, kann die Seitenblende 38a zusätzlich zu einer Schwenkbewegung auch noch eine Verlagerungsbewegung nach hinten durchführen, wodurch sich ein lediglich virtueller Drehpunkt ergibt.

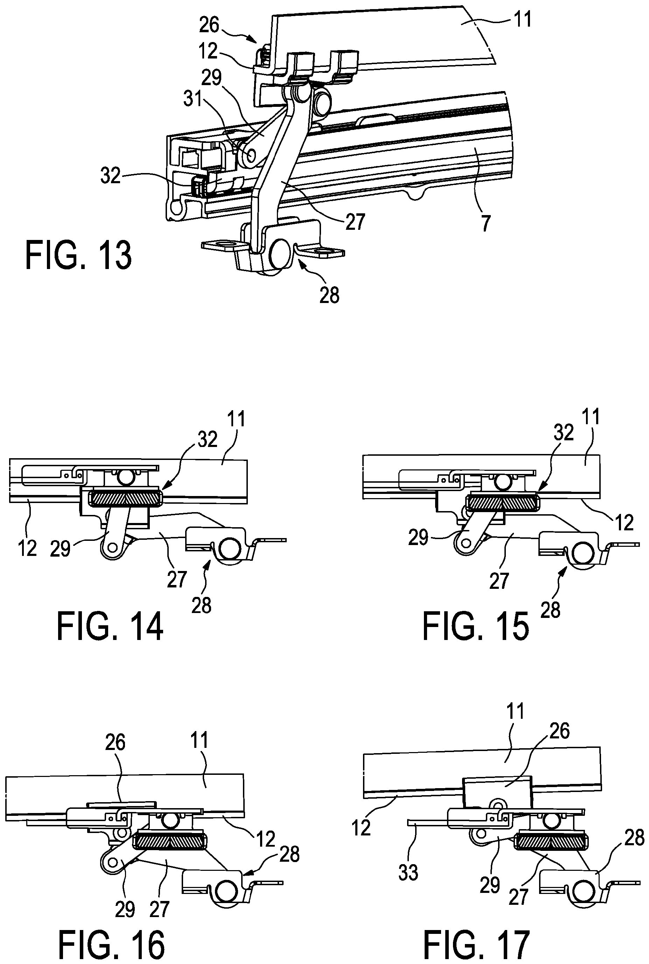

Unterschiedliche Funktionsstellungen der hinteren Ausstellmechanik 25 sind anhand der Fig. 13 bis 19 gut nachvollziehbar. Dabei ist erkennbar, dass der Steuerhebel 29 gemeinsam mit dem Schwenkhebel 27 nach dem Kniehebelprinzip arbeitet. Der Steuerhebel 29 wird durch den Führungsschlitten 32 bei einer Verfahrbewegung nach hinten mitgenommen und zieht hierdurch, wie anhand der Fig. 15 bis 19 erkennbar ist, zwangsläufig den Schwenkhebel 27 nach oben, bis dieser seine obere Endstellung erreicht hat. Die Verlagerung des Schwenkhebels 27 und damit des Steuergleiters 26 mittels des Steuerhebels 29 hat einen zusätzlichen Vorteil. Es ist möglich, den Steuergleiter 26 in verschiedenen Ausstellpositionen zu sichern. So ist es erfindungsgemäß insbesondere möglich, eine dynamische Hubabsenkung des Steuergleiters 26 und damit des Trägerprofils 11 zu erzielen, wenn das Trägerprofil 11 in seine Lüfterstellung überführt ist. Dies führt dazu, dass bei hohen Fahrgeschwindigkeiten das bewegliche Dachteil 2 in eine etwas flachere Lüfterstellung abgesenkt werden kann, wodurch ein Wummern oder andere störende Geräusche im Fahrzeuginnenraum reduziert werden können.

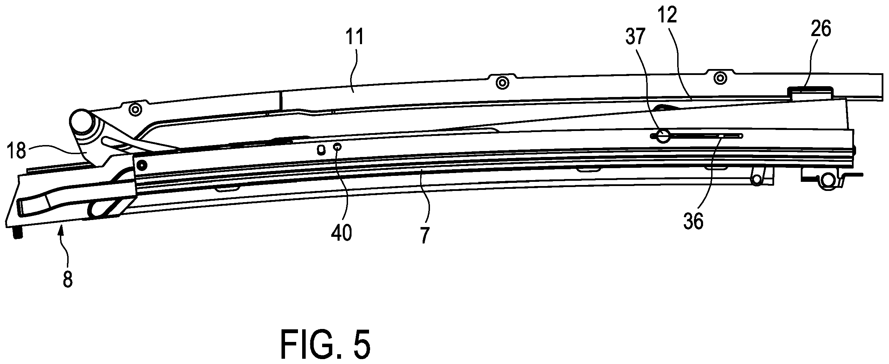

Anhand der Fig. 5 ist das sowohl im Bereich der vorderen Ausstellmechanik als auch im Bereich der hinteren Ausstellmechanik nach oben ausgestellte Trägerprofil 11 erkennbar.

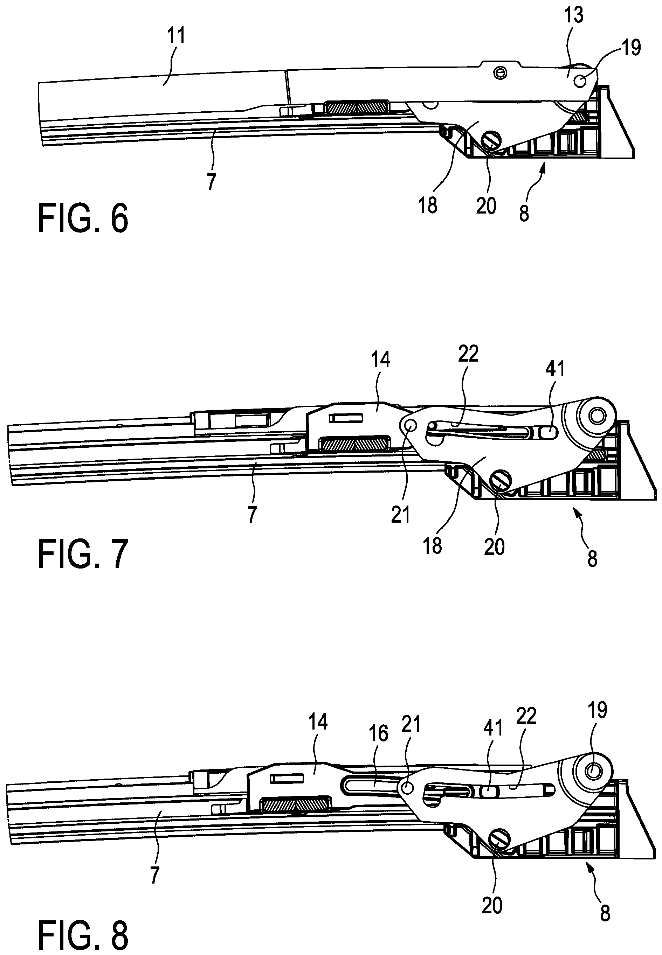

Anhand der Fig. 6 bis 8 ist das gegenseitige Ineinandergreifen des vorderen Ausstellhebels 18 und des Steuerschlittens 14 erkennbar, wie auch die Überlagerung des Ausstellhebels 18 und des Steuerschlittens 14 und die daraus resultierende, in Längsrichtung kompakte Gestaltung der Funktionskomponenten. Der Steuernocken 41 des Steuerschlittens 14 greift in die Steuerkulisse 22 des Ausstellhebels 18 ein, während das Steuerlager 21 in die Steuerkulisse 16 des Steuerschlittens 14 hineinragt. Anhand der Fig. 7 und 8 sind zwei unterschiedliche Funktionsstellungen gezeigt.

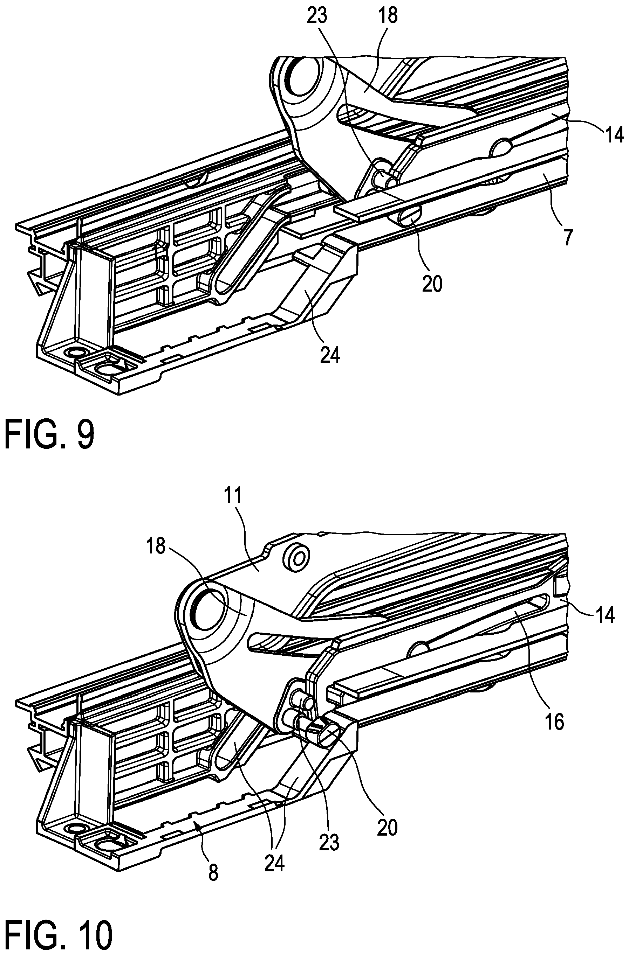

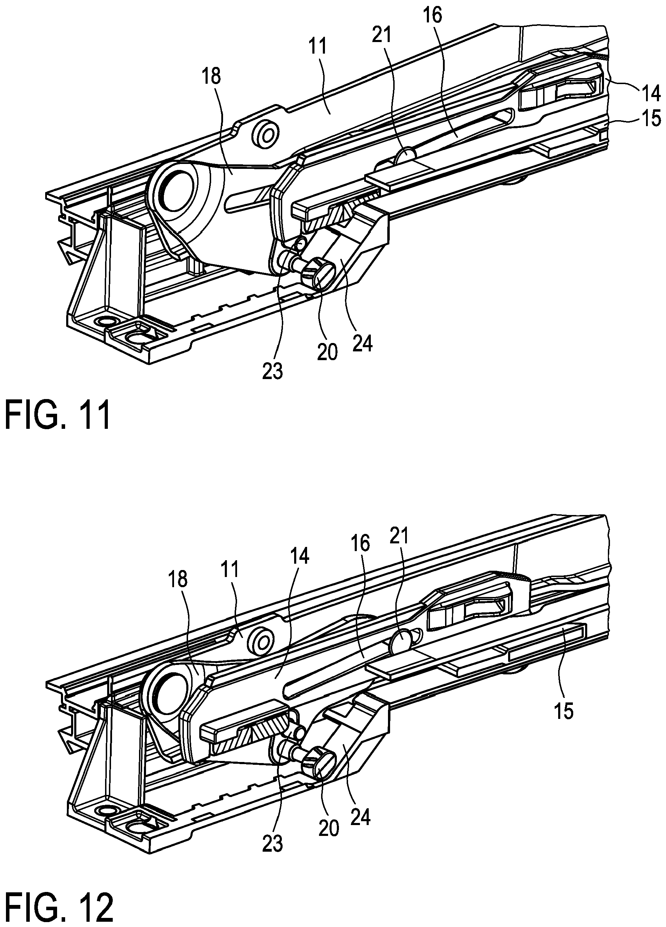

Anhand der Fig. 9 bis 12 ist die zuvor beschriebene Funktion des Stützzapfens 23 gut erkennbar. In den Stellungen gemäß den Fig. 9 und 10 stützt der Stützzapfen 23 sich frontseitig an einer vorderen Stirnkante des Steuerschlittens 14 ab. In der Position gemäß Fig. 11 stützt der Stützzapfen 23 sich im Bereich der Unterkante des Frontbereichs des Steuerschlittens 14 ab.

## Patentansprüche

1. Antriebssystem für ein bewegliches Dachteil (2) eines Spoilerdachmoduls eines Kraftfahrzeugs, mit einem Trägerprofil (11), an dem das bewegliche Dachteil befestigt ist, und dem eine Steuermechanik zugeordnet ist, um das Trägerprofil (11) zwischen einer Schließstellung, einer Lüfterstellung und einer Öffnungsstellung zu verlagern, wobei die Steuermechanik in einer fahrzeugfesten Führungsschienenanordnung (7, 7a) verfahrbar gelagert ist, und wobei eine hochkant ausgerichtete Seitenblende (38, 38a) vorgesehen ist, die in Längsrichtung der Führungsschienenanordnung (7, 7a) erstreckt ist, **dadurch gekennzeichnet, dass** die Seitenblende (38, 38a) in Hochrichtung relativ zu der Führungsschienenanordnung (7, 7a) begrenzt beweglich gelagert ist.

2. Antriebsystem nach Anspruch 1, **dadurch gekennzeichnet, dass** der Seitenblende (38, 38a) eine Zwangssteuerung zugeordnet ist, die eine Verlagerung der Seitenblende (38, 38a) in Abhängigkeit von einer Bewegung wenigstens eines Funktionsteils der Steuermechanik durchführt.

3. Antriebssystem nach Anspruch 1 oder 2, **dadurch gekennzeichnet, dass** die Seitenblende (38, 38a) an einem vorderen Endbereich zumindest weitgehend in einer durch die Längsrichtung sowie eine Hochrichtung der Führungsschienenanordnung (7, 7a) aufgespannten Schwenkebene schwenkbeweglich gelagert ist.

4. Antriebssystem nach Anspruch 3, **dadurch gekennzeichnet, dass** die Seitenblende (38a) mittels einer Bogenführung in dem vorderen Endbereich um einen virtuellen Drehpunkt in Längsrichtung und in Hochrichtung verlagerbar ist.

5. Antriebssystem nach einem der vorhergehenden Ansprüche, **dadurch gekennzeichnet, dass** die Seitenblende (38) in Abstand hinter dem vorderen Endbereich mit einer gekrümmten Führungskulisse (39) versehen ist, in die ein Kulissenglied (37) gleitbeweglich eingreift, das mit dem Funktionsteil der Steuermechanik verbunden ist.

6. Antriebssystem nach Anspruch 5, **dadurch gekennzeichnet, dass** als Funktionsteil eine in der Führungsschienenanordnung (7) begrenzt linearbeweglich verschiebbare Steuerstange (32 bis 34) einer hinteren Ausstellmechanik (25) vorgesehen ist.

7. Antriebssystem nach Anspruch 6, **dadurch gekennzeichnet, dass** die Führungsschienenanordnung (7) in einer zu der Seitenblende (38) gewandten Seitenwandung einen in Längsrichtung der Führungsschienenanordnung (7) erstreckten Führungsschlitz (36) aufweist, durch den das Kulissenglied (37) von der Steuerstange (32 bis 34) zu der Seitenblende (38) hindurchragt.
